# EUROPÄISCHE PATENTANMELDUNG

(11) **EP 1 233 378 A1**
(43) Veröffentlichungstag der Anmeldung: **21.08.2002**
(21) Anmeldenummer: 01122772.5
(22) Anmeldetag: 21.09.2001
(51) Int. Cl.: G07C 9/00, G07F 7/10, G07F 19/00

(54) **System zur Erstellung und zum Gebrauch von flüchtigen Berechtigungen und mobiles Telekommunikations-Endgerät hierfür**

(71) Anmelder: SIEMENS AKTIENGESELLSCHAFT, 80333 München (DE)
(72) Erfinder: Linder, Hermann, 84405 Dorfen (DE)

(57) **Zusammenfassung**

Die Erfindung betrifft ein System zur Erstellung und zum Gebrauch einer flüchtigen Berechtigung, wie Eintrittskarten, Fahrkarten, Autobahn-Vignetten oder dergleichen, mittels einer Bestellung über einen Applikationsserver, der die flüchtige Berechtigung zu dem mobilen Telekommunikations-Endgerät überspielt. Außerdem betrifft die Erfindung ein mobiles Telekommunikations-Endgerät mit einer Ausstattung, welche die flüchtige Berechtigung wiedergeben kann.

## Beschreibung

Die Erfindung betrifft ein System zur Erstellung und zum Gebrauch von flüchtigen Berechtigungen, gemäß dem Anspruch 1. Unter flüchtigen Berechtigungen sind z.B. Eintrittskarten, Fahrkarten, Sitzplatzreservierungen, Autobahn-Vignetten und dergleichen zu verstehen. Diesen flüchtigen Berechtigungen ist gemeinsam, dass sie nur für einen einzigen Anlaß oder nur für eine begrenzte Zeitspanne Gültigkeit haben. Weiterhin betrifft die Erfindung ein mobiles Telekommunikations-Endgerät, gemäß dem Oberbegriff des Anspruches 10.

Beim Stand der Technik werden z.B. Fahrkarten, Eintrittskarten und Autobahn-Vignetten an einem Verkaufsschalter gekauft und auch dort ausgehändigt. Eine derartige flüchtige Berechtigung wird dann bei Bedarf - also bei einer Kontrolle - vorgezeigt. Das Papierdokument der flüchtigen Berechtigung ist der Beweis für die Entrichtung des Kaufpreises.

Nachteilig am Stand der Technik ist, dass zunächst ein Verkaufsschalter oder ein Ticketautomat für die flüchtige Berechtigung aufgesucht werden muss, um in deren Besitz zu gelangen. Dieses ist sehr zeitaufwendig und gegebenenfalls beispielsweise durch Fahrtkosten oder Fahrtunterbrechungen zusätzlich kostenintensiv.

Es gibt zwar im Stand der Technik auch die Möglichkeit eine flüchtige Berechtigung per Telefon oder per Internet zu bestellen und in Verbindung mit einer Kreditkarte zu bezahlen, jedoch muss dann diese flüchtige Berechtigung immer noch persönlich von einem Schalter - oder einer anderen Ausgabestelle - abgeholt werden. Sollte eine Abholung beim Stand der Technik nicht erforderlich sein - weil die flüchtige Berechtigung beispielsweise einem auf dem Postwege zugeschickt wird - so vergeht zwischen der Bestellung und dem Erhalt eine geraume Zeitspanne. Diese Zeitspanne ist bei schnell benötigten flüchtigen Berechtigungen unvertretbar lang, so dass eine Vorbestellung keinen wirtschaftlichen oder zeitlichen Vorteil bringt.

Will man auf flüchtige Berechtigungen in Papierform zukünftig verzichten, so benötigt man einen anderen Träger für sie, der aber dennoch von einer Person mit sich getragen werden kann. Ein entsprechender Träger könnte ein mobiles Telekommunikations-Endgerät mit einer geeigneten Ausstattung sein.

Es ist deshalb Aufgabe der Erfindung, ein System zur Erstellung und zum Gebrauch von flüchtigen Berechtigungen bereitzustellen, welches die Nachteile des Standes der Technik zu mindestens reduziert oder sogar beseitigt. Ferner ist es Aufgabe der Erfindung, einen mobilen Träger der flüchtigen Berechtigung zu finden.

Die Aufgabe wird durch die Merkmale der unabhängigen Patentansprüche 1 und 10 gelöst. Vorteilhafte Weiterbildung der Erfindung sind Gegenstand untergeordneter Ansprüche.

Der Erfinder hat erkannt, dass ein mobiles Telekommunikations-Endgerät bei entsprechender Ausstattung als Träger einer papierlosen, flüchtigen Berechtigung geeignet ist. Der entscheidende Vorteil eines mobilen Telekommunikations-Endgerätes ist, dass es von seinem Benutzer naturgemäß mit sich geführt wird. Dadurch kann beispielsweise das Display eines mobilen Telekommunikations-Endgerätes als Beweis für eine gültige flüchtige Berechtigung dienen.

Um in den Besitz einer flüchtigen Berechtigung zu gelangen, wird - wie auch schon teilweise beim Stand der Technik - diese bestellt, zugestellt, gegebenenfalls geändert oder storniert. Erfindungsgemäß wird die Bestellung aber einem Applikationsserver eines Dienstleisters zugeleitet. Als Dienstleister ist beispielsweise der Verkaufsservice eines Fußballvereines, einer Eisenbahn-, Flug- oder Autobahngesellschaft zu nennen.

Die Bestellung kann hierbei mittels eines Anrufes mit einem mobilen Telekommunikations-Endgerät oder auch einem Schnurtelefon bei einer Ansprechperson beim Dienstleister erfolgen. Zur Identifizierung des Benutzers dienen dann die Rufnummer des Telefons und/oder seine Kreditkarten-Nummer. Die Ansprechperson kann dann die Informationen und Wünsche des Anrufers dem Applikationsserver des Anbieters zuleiten.

In einer anderen Version der Bestellung kann sie als SMS-Nachricht (SMS = Short Message Service) direkt zum Applikationsserver geleitet werden. Hier ist also keine Person des Dienstleisters erforderlich. Zur Identifizierung des Benutzers dient dann die Rufnummer des mobilen Telekommunikations-Endgerätes und die entsprechenden Authentifizierungsprozeduren des Telkommunikationsdienstes (z.B. Authentifizierung nach GSM). Die Rufnummer ist beim GSM-Standard fest und nicht manipulierbar mit der SMS gekoppelt.

Es gibt aber auch die Möglichkeit, mittels eines Internetzuganges mit dem Applikationsserver Kontakt aufzunehmen und die Bestellung vorzunehmen. Dieser Zugang kann auch von Mobilfunkterminals über entsprechende IP Zugangsdienste wie z.B. WAP oder i-mode erfolgen. Dabei ist es unerheblich, ob die Verbindung innerhalb des Mobilfunknetzes zu einem IP Einwahlknoten über eine circuit switched oder paketorientierten (z.B. GPRS) Verbindung erfolgt. Die Identifizierung des Benutzers erfolgt beispielsweise über die IP des kontaktierenden Rechners und/oder die Kreditkartennummer bzw. über die mobilfunkspezifischen Authentifizierungsprozeduren.

Bei Kreditkartennummern kann über einen Datenabgleich mit Datenbanken der Kreditkartengesellschaften der Benutzer eindeutig zugeordnet werden. Zudem kann dann auch der erforderliche Betrag entweder sofort oder auch später für die flüchtige Berechtigung abgebucht werden.

Nach erfolgter Bestellung und Buchung der flüchtigen Berechtigung sendet dann der Applikationsserver ein Signal an das mobile Telekommunikations-Endgerät des Benutzers. Hier wird das Signal dann auch gespeichert. Vorzugsweise wird das Signal dann in der SIM-Karte gespeichert, weil sie dort auch bei Stromausfall bzw. Endgerätewechsel erhalten bleibt. Das Signal stellt in seiner Beschaffenheit eine flüchtige Berechtigung dar.

Die flüchtige Berechtigung kann in der Form einer Display-Anzeige eines mobilen Telekommunikations-Endgerätes gestaltet sein. Bei einer Sichtkontrolle - z.B. durch einen Schaffner - kann dann das die flüchtige Berechtigung darstellende Display vorgezeigt werden.

Display-Inhalte sind grundsätzlich aber auch vom Benutzer über eine elektrische Schnittstelle in ein mobiles Telekommunikations-Endgerat ladbar und es wäre deshalb denkbar, dass unerlaubt versucht wird, flüchtige Berechtigungen selbst zu erzeugen. Wichtig ist es deshalb für das Funktionieren des erfindungsgemäßen Systems, dass die flüchtige Berechtigung fälschungssicher ist. Dieses heißt, dass die flüchtige Berechtigung weder durch den Benutzer noch durch andere veränderbar ist und auch nicht lokal erzeugt werden kann. Bei mittels einer SMS-Nachricht zugesandten flüchtigen Berechtigung gibt es aber einen wirksamen Schutz gegen Fälschungen, da dort immer die Rufnummer des sendenden Teilnehmers erkennbar ist und diese nicht manipuliert werden kann. Deshalb kann ein Kontrolleur über die zugeordnete Rufnummer immer den Absender der flüchtigen Berechtigung und damit die richtige Rufnummer des Dienstleisters erkennen, für den auch er tätig ist. Ähnliches ist realisierbar, wenn die flüchtige Berechtigung direkt online vom Applikationsserver über einen Internetdienst (WAP, I-mode) an das Mobilfunkendgerät gesendet wird.

Eine flüchtige Berechtigung kann auch in der Form bestehen, dass sie z.B. als Infrarot-Signal über eine Infrarot-Schnittstelle des mobilen Telekommunikations-Endgerätes einer anderen, kontrollierenden Infrarot-Schnittstelle mitgeteilt wird. Diese kontrollierende Infrarot-Schnittstelle kann eine Kontroll-Station sein, die einem sperrbaren Drehkreuz oder einer Schranke zugeordnet ist.

Ferner kann eine flüchtige Berechtigung aus einem Signal bestehen, welches mittels der Steck-Schnittstelle des mobilen Telekommunikations-Endgerätes einem Steckkontakt eines kontrollierenden Gerätes mitgeteilt wird.

Auch eine lokale Funkschnittstelle (z.B. Bluetooth oder WLAN) am mobilen Telekommunikations-Endgerät kann das Signal einer flüchtigen Berechtigung übermitteln.

Die genannten Darstellungsformen der flüchtigen Berechtigung können einzeln oder auch in Kombination miteinander Anwendung finden.

Das Infrarot-Signal, das Steckkontakt-Signal und das Signal über die lokale Funkschnittstelle stellen, im Gegensatz zur Display-Anzeige einer flüchtigen Berechtigung, einen elektronischen Code dar. Dieser Code kann zusätzlich mit einer elektronischen Signatur ausgestattet sein, um das Signal der flüchtigen Berechtigung fälschungssicher zu machen.

Vorteilhaft ist es im Rahmen der Erfindung, wenn bei der Bestellung oder auch der Änderung für eine flüchtige Berechtigung das Bestellgerät (Mobiles Telekommunikations-Endgerät, PC, PDA) für die Eingabe der erforderlichen Daten (Kontonummer, Kreditkartennummer, Kundennummer, Datum, Uhrzeit, Bahnstrecke, Anzahl der Sitzplätze, Platzreservierung, Raucher/Nichtraucher, Veranstaltung, Reverenznummer, Ablauf-Gültigkeitsdaten) eine Eingabemaske vorgesehen ist. Ferner ist es vorteilhaft, wenn wiederkehrende Daten eines Dienstleisters bzw. für eine bestimmte Veranstaltungsart die entsprechenden Eingabefelder dieser Eingabemaske vorbelegt sind.

Gelegentlich kommt es vor, dass kurzfristig flüchtige Berechtigungen geändert oder storniert werden müssen. Dieses kann z.B. dann der Fall sein, wenn eine andere Bahn- oder Flugverbindung gewählt werden muss. Hierbei ist es vorteilhaft, wenn selbst noch kurz vor der Kontrolle durch eine Kontrolleinrichtung die Daten der flüchtigen Berechtigung mittels des Bestellgerätes - insbesondere eines (mobilen) Telekommunikations-Endgerätes - geändert werden kann.

Im Rahmen der Erfindung muss ein mobiles Telekommunikations-Endgerät, insbesondere ein Mobiltelefon oder ein Organizer mit einem Mobilfunkmodul, in der Lage sein, flüchtige Berechtigungen zu speichern und auch über eine Ausgabeeinheit auszugeben. Zur Ausgabe einer flüchtigen Berechtigung muss beispielsweise das mobile Telekommunikations-Endgerät über ein Display verfügen, welches die flüchtige Berechtigung in ausreichender Qualität und Zuverlässigkeit zeigen kann. Für die Ausgabe eines elektronischen Codes muss das Gerät mit der erforderlichen Hardware ausgestattet sein. Die Kennung des Absenders der flüchtigen Berechtigung muss dabei durch den Benutzer unveränderbar darstellbar sein.

Mobile Telekommunikations-Endgeräte verfügen über eine Vielzahl von Tastenfunktionen. Um sicher zu stellen, dass nicht aus Versehen eine flüchtige Berechtigung vor Ablauf ihrer Gültigkeit gelöscht wird, ist es vorteilhaft, wenn diese flüchtige Berechtigung vor dem Ablaufdatum nur über einen speziellen Code (beispielsweise eine Tastenkombination) gelöscht werden kann. Besonders vorteilhaft ist es, wenn nur über den sogenannten PIN2-Code gelöscht werden kann, da dieser Code dem Benutzer bereits bekannt ist und zudem dieser Code durch seine Komplexität nicht aus Versehen betätigt werden kann.

Neben dem manuellen Löschen von flüchtigen Berechtigungen kann das System auch derart eingestellt sein, dass die Daten automatisch nach Ablauf ihrer Gültigkeit gelöscht werden. Vorteilhaft ist es, wenn der Benutzer des Systems zwischen einer automatischen und einer manuellen Löschung wählen kann.

Im folgenden wird die Erfindung anhand eines bevorzugten Ausführungsbeispieles mit Hilfe der Figur näher beschrieben. Es zeigt:

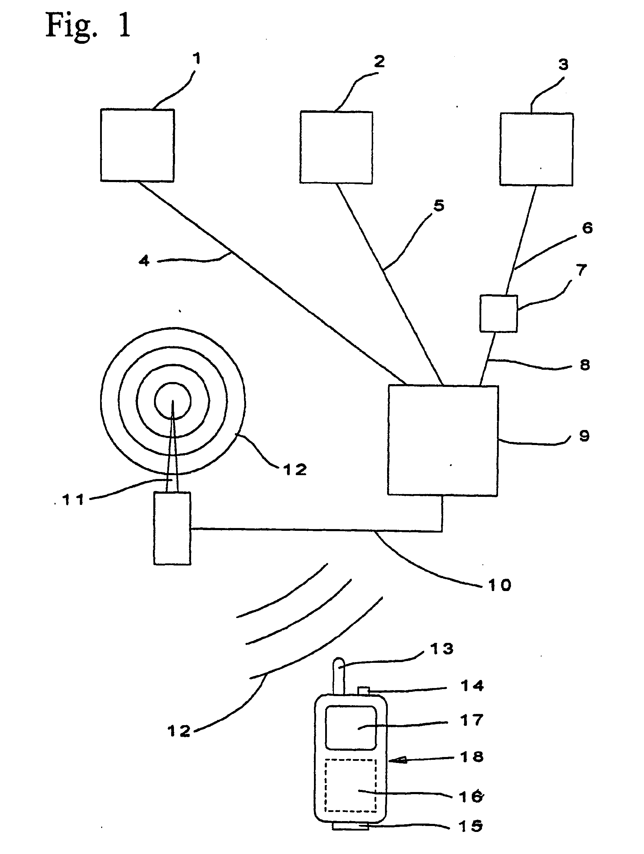

- Figur 1:: einen schematischen Aufbau des erfindungsgemäßen Systems.

In der Figur 1 wird der schematische Aufbau des erfindungsgemäßen Systems zur Erstellung und zum Gebrauch von flüchtigen Berechtigungen gezeigt. Im Zentrum der Figur 1 befindet sich ein Applikationsserver 9. Dieser Applikationsserver 9 kann über verschiedene Zugänge 1, 2, 3 kontaktiert werden. Der Zugang 1 wird mittels des Internets durch eine Kabel-Verbindung 4 hergestellt. Das hierfür erforderliche Eingabegerät kann beispielsweise ein PC, ein PDA oder ein Palm-Rechner sein.

Eine andere Verbindung zum Applikationsserver 9 kann über einen Zugang 2 mittels eines mobilen Telekommunikations-Endgerätes 18 in Kombination mit einer SMS-Nachricht oder über einen mobilen Internetdienst wie z.B. WAP oder I-mode erfolgen. Der Zugang 2 ist dann über ein nicht explizit dargestelltes Signal 12 und eine Relaisstation 11 realisiert.

Aber auch durch Sprachverkehr lassen sich Daten dem Applikationsserver 9 zuführen. Der Zugang 3 kann demzufolge mit einem herkömmlichen Telefongespräch (oder auch über Mobilfunk) hergestellt werden. Eine Ansprechperson 7 eines Dienstleisters wird über die Verbindung 6 erreicht. Diese Ansprechperson 7 leitet über eine Verbindung 8 die erforderlichen Daten der flüchtigen Berechtigung dem Applikationsserver 9 zu.

Wenn die Bestellung und die Buchung - gegebenenfalls auch noch die Abbuchung von einem Konto - für die flüchtige Berechtigung erfolgt ist, so wird über eine Verbindung 10 einer Relaisstation 11 für mobile Telekommunikation, die flüchtige Berechtigung über ein Funksignal 12 dem mobilen Telekommunikations-Endgerät 18 zugeleitet.

Mittels der Antenne 13 des mobilen Telekommunikations-Endgerät 18 wird das Funksignal 12 empfangen. Das erfindungsgemäße mobile Telekommunikations-Endgerät 18 verfügt mindestens über eine Ausgabe-Einheit für die flüchtige Berechtigung. Die Ausgabe-Einheit kann beispielsweise das Display 17 des mobilen Telekommunikations-Endgerätes 18 darstellen. Weitere Ausgabe-Einheiten können eine Steck-Schnittstelle 15, eine Infrarot-Schnittstelle 14 oder eine - hier nicht dargestellte - lokale Funkschnittstelle (Bluetooth, WLAN) sein.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

Insgesamt wird mit der Erfindung also ein System vorgeschlagen, welches zur Erstellung und zum Gebrauch einer flüchtigen Berechtigung, wie Eintrittskarten, Fahrkarten, Sitzplatzreservierungen, Autobahn-Vignetten oder dergleichen, mittels einer Bestellung über einen Applikationsserver, der die flüchtige Berechtigung zu dem mobilen Telekommunikations-Endgerät überspielt, dient. Außerdem betrifft die Erfindung ein mobiles Telekommunikations-Endgerät mit einer Ausstattung, welche die flüchtige Berechtigung fälschungssicher wiedergeben kann.

## Patentansprüche

1. System zur Erstellung und zum Gebrauch einer flüchtigen Berechtigung, indem ein Benutzer bei einem Dienstleister eine Bestellung aufgibt, die in einem Applikationsserver (9) des Anbieters abgelegt und gegebenenfalls bearbeitet wird, wobei sich der Benutzer gegenüber dem Dienstleister eindeutig identifiziert, woraufhin die flüchtige Berechtigung mit den Daten über die Art und der/dem Gültigkeitsdauer/-datum durch den Applikationsserver (9) auf ein mobiles Telekommunikations-Endgerät (18) des Benutzers übermittelt und gespeichert werden, welches den Benutzer des Telekommunikations-Endgerätes (18) in die Lage versetzt, die flüchtige Berechtigung bei sich zu tragen und somit gegenüber Kontrolleinrichtungen zu belegen.

2. System nach Anspruch 1, **dadurch gekennzeichnet, dass** die flüchtige Berechtigung durch einen definierten Display-Inhalt des Telekommunikations-Endgerätes (18) darstellt wird.

3. System nach einem der Ansprüche 1 oder 2, **dadurch gekennzeichnet, dass** die flüchtige Berechtigung durch ein Signal dargestellt wird, welches über eine Infrarot-Schnittstelle (14) des Telekommunikations-Endgerätes (18) gegenüber Kontrolleinrichtungen mitgeteilt wird.

4. System nach einem der Ansprüche 1 bis 3, **dadurch gekennzeichnet, dass** die flüchtige Berechtigung durch ein Signal dargestellt wird, welches über eine elektronische Steck-Schnittstelle (15) des Telekommunikations-Endgerätes (18) gegenüber Kontrolleinrichtungen mitgeteilt wird.

5. System nach einem der Ansprüche 1 bis 4, **dadurch gekennzeichnet, dass** die flüchtige Berechtigung durch ein Signal dargestellt wird, welches über eine lokale Funkschnittstelle des Telekommunikations-Endgerätes (18) gegenüber Kontrolleinrichtungen mitgeteilt wird.

6. System nach einem der Ansprüche 3 bis 5, **dadurch gekennzeichnet, dass** die flüchtige Berechtigung über eine elektronische Signatur gesichert ist.

7. System nach einem der Ansprüche 1 bis 6, **dadurch gekennzeichnet, dass** für die Eingabe an einem Bestellgerät eine Eingabemaske vorhanden ist.

8. System nach Anspruch 7, **dadurch gekennzeichnet, dass** mindestens ein Feld der Eingabemaske schon durch spezifische Daten der Geschäftsbeziehung des angewählten Dienstleisters vorbelegt ist.

9. System nach einem der Ansprüche 1 bis 8, **dadurch gekennzeichnet, dass** die flüchtige Berechtigung vom Bestellgerät und vom Telekommunikations-Endgerät (18) aus beim Applikationsserver (9) geändert werden kann, wobei der Applikationsserver (9) dann eine Aktualisierung bzw. eine Stornierung der flüchtigen Berechtigung an das mobile Telekommunikations-Endgerät (18) sendet.

10. Mobiles Telekommunikations-Endgerät (18) - insbesondere ein Mobiltelefon oder ein Organizer mit Mobilfunkmodul - mit einem Speicher für digitale Informationen und mindestens einer Ausgabe-Einheit, **dadurch gekennzeichnet, dass** der Speicher die flüchtige Berechtigungen speichern und die Ausgabe-Einheit (14, 15, 17) die flüchtige Berechtigung ausgeben kann, wobei der Absender der flüchtigen Berechtigung eindeutig identifizierbar und die flüchtige Berechtigung lokal nicht veränderbar ist.

11. Mobiles Telekommunikations-Endgerät (18) nach Anspruch 10, **dadurch gekennzeichnet, dass** die flüchtige Berechtigung auf der SIM-Karte angeordnet ist.

12. Mobiles Telekommunikations-Endgerät (18) nach einem der Ansprüche 10 oder 11, **dadurch gekennzeichnet, dass** die flüchtige Berechtigung vor Ablauf der Gültigkeitsdauer nur durch Sondermassnahmen wie z.B. Eingabe eines Passwortes oder des PIN2 manuell löschbar realisiert ist.

13. Mobiles Telekommunikations-Endgerät (18) nach einem der Ansprüche 10 bis 12, **dadurch gekennzeichnet, dass** die flüchtige Berechtigung nach Ablauf der Gültigkeitsdauer automatisch löschbar realisiert ist.

14. Mobiles Telekommunikations-Endgerät (18) nach einem der Ansprüche 10 bis 13, **dadurch gekennzeichnet, dass** die Art des Löschens der Daten der flüchtigen Berechtigung - also entweder automatisches Löschen oder auch manuelles Löschen - wählbar gestaltet ist.

15. Mobiles Telekommunikations-Endgerät (18) nach einem der Ansprüche 10 bis 14, **dadurch gekennzeichnet, dass** das Löschen der flüchtigen Berechtigung derart gestaltet ist, dass eine Archivkopie angelegt wird, welche eindeutig als solche erkennbar ist.
